# EUROPÄISCHE PATENTANMELDUNG

(11) **EP 2 093 514 A2**
(43) Veröffentlichungstag der Anmeldung: **26.08.2009**
(21) Anmeldenummer: 09002086.8
(22) Anmeldetag: 14.02.2009
(51) Int. Cl.: F24H 8/00, C02F 1/28, C02F 1/66

(54) **Vorrichtung zur Aufbereitung von Flüssigkeiten**

(30) Priorität: 20.02.2008 DE 102008010185
(71) Anmelder: Freigeber, Jürgen, 42799 Leichlingen (DE)
(72) Erfinder: Freigeber, Jürgen, 42799 Leichlingen (DE)
(74) Vertreter: Sroka, Peter-Christian

(57) **Zusammenfassung**

Eine Vorrichtung zur Aufbereitung von Flüssigkeiten, bestehend aus einem einen Flüssigkeitszulauf und einen Flüssigkeitsablauf aufweisenden Aufbereitungsbehälter zur Aufnahme von chemisch und/oder physikalisch und/oder mechanisch wirksamen Aufbereitungsmitteln beziehungsweise Aufbereitungseinrichtungen, ist dadurch gekennzeichnet, dass sie eine dem Kondensatablauf (10) vorgeschaltete Kammer aufweist, die unterteilt ist in einen oberen, die Kondensatablaufkammer bildenden Kammerabschnitt (22a) zur Aufnahme des nasslaufenden Rotors (43) einschließlich des Pumpenlaufrades einer Kreiselpumpe und in einen unteren Kammerabschnitt (22b) zur Aufnahme des Stators (44) der Kreiselpumpe.

## Beschreibung

Die Erfindung betrifft eine Vorrichtung zur Aufbereitung von Flüssigkeiten, bestehend aus einem einen Flüssigkeitszulauf und einen Flüssigkeitsablauf aufweisenden Aufbereitungsbehälter zur Aufnahme von chemisch und/oder physikalisch und/oder mechanisch wirksamen Aufbereitungsmitteln.

Der Begriff "Aufbereitung" umfasst alle möglichen Verfahren zum Reinigen von Flüssigkeiten jeder Art, z.B. durch Absorption oder Adsorption, Neutralisation, Ausfällen, chemische Umsetzung, Ausfiltern usw. der Verunreinigungen.

Der Begriff "chemische Aufbereitung" umfasst den Einsatz chemischer Mittel in Form von Flüssigkeiten oder Feststoffen, die in der Lage zum Reinigen eine Flüssigkeit durch Absorption bzw. Adsorption, Neutralisation, Ausfällen oder sonstige chemische Umsetzungen von unerwünschten Stoffen sind, die in der Flüssigkeit in irgendeiner Form enthalten sein können.

Der Begriff "physikalische und/oder mechanisch wirksame Aufbereitungsmittel" steht stellvertretend für Filter in Form von Filtereinsätzen oder granulatförmigen Filtermitteln und dergleichen.

In Abhängigkeit von den örtlichen Gegebenheiten ist es häufig erforderlich, der Aufbereitungsvorrichtung eine Pumpe zuzuordnen, um die innerhalb der Aufbereitungsvorrichtung gereinigte bzw. aufbereitete Flüssigkeit abzupumpen.

Zu diesem Zweck ist die erfindungsgemäße Vorrichtung dadurch gekennzeichnet, dass sie eine dem Flüssigkeitsablauf vorgeschaltete Kammer aufweist, die unterteilt ist in einen oberen, eine Flüssigkeitsablaufkammer bildenden Kammerabschnitt zur Aufnahme des nasslaufenden Rotors einschließlich des Pumpenlaufrades einer Kreiselpumpe und in einen unteren Kammerabschnitt zur Aufnahme des Stators der Kreiselpumpe, so dass es ohne größere Umstände möglich ist, in den Aufbereitungsbehälter eine Pumpe, vorzugsweise in Form einer Kugelmotorpumpe, zu integrieren bzw. einzubauen, wobei die Förderleitung dieser Pumpe beispielsweise mittels eines Schlauchs an den Flüssigkeitsablauf angeschlossen werden kann.

Gemäß einer bevorzugten Ausführungsform ist vorgesehen, dass in den Aufbereitungsbehälter bereits eine Flüssigkeitspumpe eingebaut ist, wobei darauf zu achten ist, dass diese Flüssigkeitspumpe einen in den Aufbereitungsbehälter integrierten, nasslaufenden Teil und einen gegenüber diesem Nassbereich isolierten, elektrischen Teil in Form eines Stators und der damit in Verbindung stehenden elektrischen Elemente aufweist.

Insbesondere für Kleinanlagen ist es häufig erwünscht, relativ dünnwandige Aufbereitungsbehälter zu verwenden, bei denen aufgrund der dünnwandigen Seitenwände die Gefahr besteht, dass diese durch den Druck der in dem Behälter befindlichen Flüssigkeit und gegebenenfalls granulatförmigen Aufbereitungsmittel nach außen aufwölben, was sowohl aus Festigkeitsgründen als auch aus Gründen eines ordnungsgemäßen Flüssigkeitsdurchlaufs durch den Behälter unerwünscht ist.

Zur Vermeidung von aus diesen Nachteilen unter Umständen resultierenden Gefahren ist gemäß weiterer Erfindung vorgesehen, dass in den Behälter Trennwände eingesetzt sind, die mit ihren vertikal ausgerichteten Rändern mit den Behälterwänden verankert sind.

Die Erfindung wird im folgenden anhand der Zeichnungen näher beschrieben:
Figur 1 zeigt in schematischer Darstellung eine Draufsicht auf den Aufbereitungsbehälter bei abgenommenen Behälterdeckel;
Figur 2 zeigt einen Vertikalschnitt des Aufbereitungsbehälters im Bereich des Flüssigkeitsauslaufs;
Figur 3 zeigt ausschnittsweise zwei Behälterwände mit einem an den Behälterwänden verankerten Einsatz.

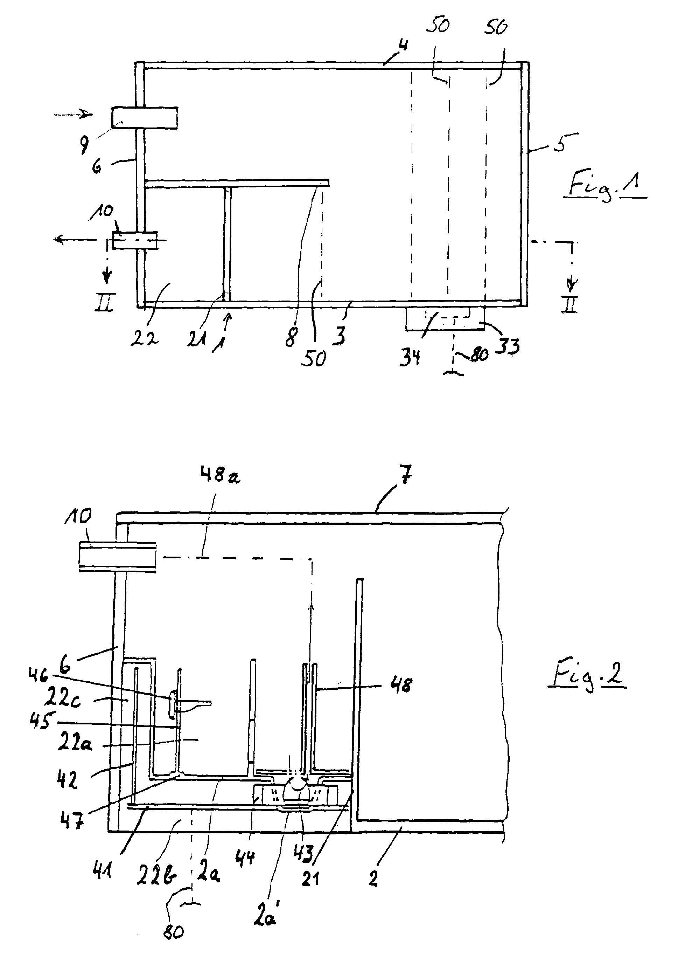

Die in den Figuren 1 und 2 schematisiert dargestellte Vorrichtung besteht beispielsweise aus einem im wesentlichen quaderförmigen Behälter 1 mit einem Boden 2, zwei Längswände 3 und 4, zwei Stirnwänden 5 und 6 und einem Deckel 7. Der Behälter 1 kann mittels einer sich über einen Teil der Behälterlänge erstreckenden Trennwand 8, die sich z.B. vom Behälterboden 2 bis zum Behälterdeckel 6 erstreckt, in nebeneinanderliegende Behälterabschnitte unterteilt sein. Der Flüssigkeitszulauf 9 und der Flüssigkeitsablauf 10 befinden sich im Bereich der Stirnwand 6 des Behälters 1.

Gemäß Figur 1 können in den Behälter 1 mehrere gestrichelt dargestellte Querwände 50 eingesetzt sein.

Figur 1 zeigt den Behälter ohne die nicht zum Gegenstand der Erfindung gehörenden Aufbereitungsmittel-Strukturen, die in Abhängigkeit von dem jeweiligen Aufbereitungsprozess völlig unterschiedlicher Art sein können. Wesentlich ist jedoch die dem Behälterablauf 10 vorgeschaltete Ablaufkammer 22, die durch eine Trennwand 21 von dem Aufbereitungsbereich abgegrenzt ist. Im Bereich der Oberseite der Trennwand 21 befindet sich eine Öffnung, z.B. in Form eines Überlaufvers.

Gemäß Figur 2 ist der auf die Trennwand 21 folgende Abschnitt des Behälters 1 unterteilt in einen oberen, die eigentliche Ablaufkammer 22a bildenden Kammerabschnitt zur Aufnahme des nasslaufenden Rotors 43 einschließlich Pumpenlaufrades einer Kreiselpumpe und in einen unteren Kammerabschnitt 22b zur Aufnahme des Stators 44 der Kreiselpumpe. Die Förderleitung 48 der Pumpe ist gemäß Linie 48a an dem Ablauf angeschlossen.

Zwischen den Kammerabschnitten 22a und 22b befinden sich Trennwände mit einem Bodenabschnitt 2a der oberhalb der Ebene des Behälterbodens 2 liegt. Der Bodenabschnitt 2a ist mit Lagerelementen für den Rotor 43 einschließlich des Pumpenlaufrades versehen. Der Bodenabschnitt 2a hat eine Einbuchtung 2a' zur Lagerung des Rotors 43 und des Pumpenlaufrades, vorzugsweise einer Kugelmotorpumpe, die nach dem Prinzip einer sogenannten Spaltrohrpumpe konzipiert, um eine Trennung zwischen dem Nassbereich der Pumpe einerseits und dem elektrischen Bereich der Pumpe andererseits zu gewährleisten.

Der Stator 44 befindet sich auf einer in den unteren Kammerabschnitt 22b eingesetzten und übliche elektrische Anschlüsse und Steuersysteme umfassenden Platine 41. Zur Ansteuerung der Pumpe ist ein Sensor vorgesehen, bestehend aus einem innerhalb des Kammerabschnittes 22a befindlichen Sensor 46 und einem Empfänger 42, der nach oben gerichtet in einen Kammerabschnitt 22c ragt, der mit dem Kammerabschnitt 22b in Verbindung steht und an einem entlang einer Führung 45 beweglichen Schwimmer befestigt ist.

An die Stirnwand 3 kann ein in Figur 1 schematisiert dargestellter Schwingungserreger 34 angeordnet sein, der z.B. in eine an der Stirnwand 5 angebrachten Tasche 33 eingesetzt ist, die vorzugsweise von außen her zugänglich ist. Die Stromversorgung sowohl des Schwingungserregers 34 als auch der Kreiselpumpe erfolgt über nur angedeutet dargestellte Leitungen 35 bzw. 80.

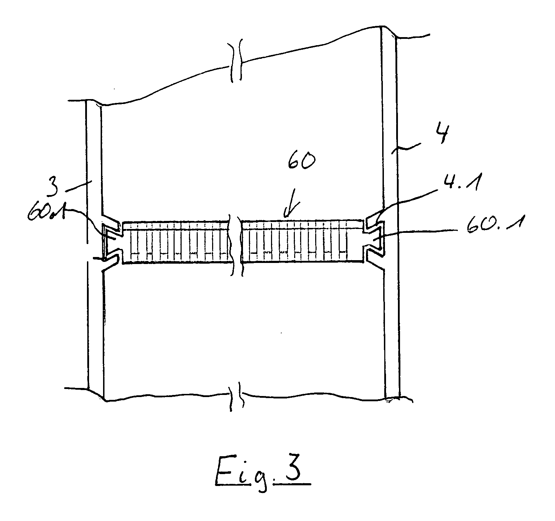

Figur 3 zeigt zwei sich gegenüberliegende Behälterwände 3 und 4, die mit sich gegenüberliegenden Schwalbenschwanzführungen 3.1 bzw. 4.1 zum Einschieben schwalbenschwanzförmig ausgebildeten 60.1 eines in den Behälter einschiebbaren Einsatzkörpers 60 versehen sind.

Die schwalbenschwanzförmigen Verklammerungselemente 3.1; 4.1; 60.1 können durch sonstige Elemente ersetzt sein, die ein seitliches Wegdrücken der Behälterwände verhindern.

## Patentansprüche

1. Vorrichtung zur Aufbereitung von Flüssigkeiten, bestehend aus einem einen Flüssigkeitszulauf und einen Flüssigkeitsablauf aufweisenden Aufbereitungsbehälter zur Aufnahme von chemisch und/oder physikalisch und/oder mechanisch wirksamen ufbereitungsmitteln beziehungsweise Aufbereitungseinrichtungen, **dadurch gekennzeichnet, dass** sie eine dem Kondensatablauf (10) vorgeschaltete Kammer aufweist, die unterteilt ist in einen oberen, die Kondensatablaufkammer bildenden Kammerabschnitt (22a) zur Aufnahme des nasslaufenden Rotors (43) einschließlich des Pumpenlaufrades einer Kreiselpumpe und in einen unteren Kammerabschnitt (22b) zur Aufnahme des Stators (44) der Kreiselpumpe.

2. Vorrichtung nach Anspruch 1 **gekennzeichnet durch** einen zwischen den Kammerabschnitten (22a; 22b) befindliche Abtrennung, die einen Bodenabschnitt (2a) hat, der oberhalb der Ebene des Behälterbodens (2) liegt.

3. Vorrichtung nach Anspruch 2, **dadurch gekennzeichnet, dass** der Bodenabschnitt (2a) auf seiner Oberseite Lagerelemente zur Lagerung des Rotors (43) einschließlich des Pumpenlaufrades aufweist.

4. Vorrichtung nach Anspruch 2 oder 3, **dadurch gekennzeichnet, dass** der Bodenabschnitt (2a) mit einer Einbuchtung (2a') zur Aufnahme des nasslaufenden Rotors und Pumpenlaufrades einer Kugelmotorpumpe versehen ist.

5. Vorrichtung nach einem der Ansprüche 2 bis 4, **dadurch gekennzeichnet, dass** der obere Kammerabschnitt (22a) eine Halterung (47) zur Befestigung einer mit einem Sender (46) ausgerüsteten Schwimmereinrichtung (45, 46) aufweist.

6. Vorrichtung nach einem der Ansprüche 2 bis 5, **dadurch gekennzeichnet, dass** der Kammerabschnitt (22b) eine nach oben gerichtete Kammererweiterung (22c) hat.

7. Vorrichtung nach einem der Ansprüche 2 bis 6, **dadurch gekennzeichnet, dass** die Förderleitung (48) der Pumpe an den Flüssigkeitsablauf (10) angeschlossen ist.

8. Vorrichtung nach einem der Ansprüche 2 bis 7, **dadurch gekennzeichnet, dass** sie zur Ansteuerung der Pumpe einen Sensor (42, 46) aufweist, der einen im Bereich des Kammerabschnittes (22a) untergebrachten Sender (46), der an einem entlang einer Führung (45) beweglichen Schwimmer (50) befestigt ist, und einen im Bereich des Kammerabschnittes (22b) untergebrachten Empfängers (42) umfasst.

9. Vorrichtung zur Aufbereitung von Flüssigkeiten, bestehend aus einem Aufbereitungsbehälter, **dadurch gekennzeichnet, dass** zwischen sich gegenüberliegende Behälterwände (3, 4) Einsatzkörper (60) eingesetzt sind, die zur Verhinderung eines seitlichen Auswölbens der Behälterwände (3, 4) mit den Behälterwänden verklammert sind.

10. Vorrichtung nach Anspruch 9, **dadurch gekennzeichnet, dass** die Behälterwände (3, 4) vertikal ausgerichtete Schwalbenschwanzführungen (3.2; 4.1) aufweisen und die insbesondere plattenförmigen Einsatzkörper an ihren vertikal ausgerichteten Längsrändern schwalbenschwanzförmige Leisten (60.1) haben.
